# EUROPEAN PATENT APPLICATION

(11) **EP 4 667 787 A1**
(43) Date of publication of application: **24.12.2025**
(21) Application number: 24756927.0
(22) Date of filing: 14.02.2024
(51) Int. Cl.: F16J 15/08

(54) **GASKET**

(30) Priority: 15.02.2023 JP 2023021951
(71) Applicant: NOK Corporation, Minato-ku Tokyo 105-8585 (JP)
(72) Inventor: AIHARA Kazuya, Nihonmatsu-shi, Fukushima 964-0811 (JP); SAITO Ryoko, Nihonmatsu-shi, Fukushima 964-0811 (JP)
(74) Representative: TBK
(86) International application number: PCT/JP2024/005101
(87) International publication number: WO 2024/172087

(57) **Abstract**

A gasket (1) is a gasket for performing sealing between two members facing each other. The gasket (1) includes: a plurality of beads (10); and at least one base portion (20), the base portion being a portion connecting to the plurality of beads (10). A width of each of the plurality of beads (10) connecting to the base portion (20) decreases toward the base portion (20).

## Description

### [Technical Field]

The present disclosure relates to a gasket.

### [Background Art]

A gasket is used in various fields. For example, in the automotive field, a variety of gaskets for motors and engine components, gaskets for air compressors, and the like are used. The application range of gaskets is broad, including construction machinery, agricultural machinery, industrial robots, and the like in addition to automobiles.

One of problems regarding gaskets is the unevenness of a surface pressure at a branch portion where a bead is branched or a base portion, which is a junction portion where a plurality of beads join together.

For example, Patent Literature 1 expresses concern that with an increase in rigidity of the bead at a branch portion where a ridge line formed by the top of a bead is branched, conformability at a region therearound decreases, leading to a decrease in surface pressure (see Patent Literature 1, paragraph [0006], Figs. 7 to 8).

For the above problem, Patent Literature 1 introduces an approach to improvement, in which "in order to equalize the surface pressure near the branch point, a flat surface substantially in a triangular shape is formed by connecting the ridge lines on the top of the bifurcated bead with an arc-shaped ridge line and forming the portion surrounded by these three ridge lines at the same height as the top of the bead" (see Patent Literature 1, paragraph [0007]).

### [Citation List]

### [Patent Literature]

Patent Literature 1: Japanese Patent Application Publication No. 2008-157377
Patent Literature 2: International Publication No. WO 2012/120924

### [Summary of the Invention]

### [Technical Problem]

However, Patent Literature 1 points out that the rigidity remains high or, conversely, becomes extremely low depending on the shape of the branch portion (the flat surface) of the bead, describing that "a surface pressure suitable for sealing fails to be obtained merely by forming the triangular flat surface at the branch portion in some cases" (see Patent Literature 1, paragraph [0008]).

Patent Literature 1 suggests, as the approach to improvement, measures in which an angle made by the ridge lines branched in two directions from the branch point of the top of the bead is set to a value greater than 25° but less than 45°. Patent Literature 1 asserts that such an angle setting maintains a compression amount of the bead to maintain the surface pressure of the bead, in other words, maintain sealability (see Patent Literature 1, paragraphs [0012] to [0016]).

Patent Literature 2 points out that the measures for equalizing the surface pressure introduced by Patent Literature 1 is not necessarily universally applicable (see Patent Literature 2, paragraphs [0006] to [0007]). Accordingly, Patent Literature 2 suggests half bead in two tiers and describes that it allows for making compression characteristics uniform throughout the bead (see Patent Literature 2, paragraphs [0011] to [0015]).

For the problem of the unevenness of the surface pressure at the branch portion where the bead is branched, the solution proposed by two literatures, Patent Literatures 1 and 2, have been reviewed hereinabove. However, in a case where the means described in Patent Literature 1 is adopted, an angle between beads branched in two direction is subject to restrictions. In a case where the means described in Patent Literature 2 is adopted, the type and/or shape of the bead is subject to restrictions. Regardless of which means is adopted, there are considerable shape restrictions imposed on the bead and it should be improved.

A problem to be solved by the present disclosure is to equalize a surface pressure at a base portion connecting to a plurality of beads without the necessity of imposing considerable shape restrictions on the beads.

### [Solution to Problem]

An aspect of a gasket according to the present invention is a gasket for sealing between two members facing each other, the gasket including: a plurality of beads; and at least one base portion, the base portion being a portion where the plurality of beads are connected, in which a width of each of the plurality of beads connecting to the base portion decreases toward the base portion.

An aspect of a gasket according to the present invention is a gasket including: a base made of metal, the base including at least two opening portions adjacent to each other; a bead molded integrally with the base, the bead being branched in three directions to surround perimeters of the two opening portions adjacent to each other; and a branch portion provided in a shape of a triangle zone at a branched position of the bead to branch the bead in the three directions from positions of three corners, in which a width of the bead located at the branch portion is equal to or less than 110 percents of a width of the bead located at a spot other than the branch portion.

An aspect of a gasket according to the present invention is a gasket including: a base made of metal, the base including at least two opening portions adjacent to each other; a bead molded integrally with the base, the bead being branched in three directions to surround perimeters of the two opening portions adjacent to each other; and a branch portion provided in a shape of a triangle zone at a branched position of the bead, the branch portion branching the bead in the three directions from positions of three corners, in which the branch portion has a recessed shape to narrow a width of the bead so that the width of the bead located at the branch portion matches a width of the bead at a spot other than the branch portion.

### [Advantageous Effects of the Invention]

It is possible to equalize a surface pressure at a base portion where a plurality of beads are connected without the necessity of imposing considerable shape restrictions on the beads.

### [Brief Description of the Drawings]

[Fig. 1] Fig. 1 is a plan view illustrating a portion of a gasket according to an embodiment of the present invention in an enlarged manner.
[Fig. 2] Fig. 2 is a cross-sectional view along an X-X line in Fig. 1.
[Fig. 3] Fig. 3 is a cross-sectional view along a Y-Y line in Fig. 1.
[Fig. 4] Fig. 4 is a plan view of a gasket, illustrating an embodiment.
[Fig. 5] Fig. 5 is a plan view illustrating a bead branched in three directions in an enlarged manner.
[Fig. 6] Fig. 6 is a plan view illustrating a portion surrounded by dash-dotted lines in Fig. 5 in a further enlarged manner.
[Fig. 7] Fig. 7 (A) is a cross-sectional view along an A-A line in Fig. 6 and Fig. 7 (B) is a cross-sectional view along a B-B line in Fig. 6.
[Fig. 8] Fig. 8 is a plan view of the portion surrounded by the dash-dotted lines in Fig. 5 in a further enlarged manner, illustrating a width of the bead located at a branch portion from a different perspective from in Fig. 6.
[Fig. 9] Fig. 9 is a diagram illustrating the bead branched in three directions in an enlarged manner, in which Fig. 9 (A) is a plan view of the present embodiment and Fig. 9 (B) is a plan view of a reference form.
[Fig. 10] Fig. 10 (A) is a cross-sectional view along an A-A line in Fig. 9(A) and Fig. 10(B) is a cross-sectional view along an A-A line in Fig. 9(B).
[Fig. 11] Fig. 11(A) is a cross-sectional view along a B-B line in Fig. 9(A) and Fig. 11(B) is a cross-sectional view along a B-B line in Fig. 9(B).
[Fig. 12] Fig. 12 is a schematic diagram illustrating a result of a test using a pressure sensitive paper.
[Fig. 13] Fig. 13 is a graph showing a difference in bead reaction force depending on whether a bead width is wide or narrow in the form of a relationship with a thickness of a metal gasket.
[Fig. 14] Fig. 14 is a diagram for explaining an installation object for a gasket according to an embodiment of the present invention.

### [Description of Embodiment]

Description will be made below on an embodiment of the present invention with reference to the drawings.

A gasket according to the present invention is a gasket for performing sealing between two members facing each other. The gasket according to the present invention is usable for, for example, sealing a coolant in a motor for an electric vehicle, a cylinder block of an engine, or the like. It should be noted that an installation object for the gasket according to the present invention is not limited to the above.

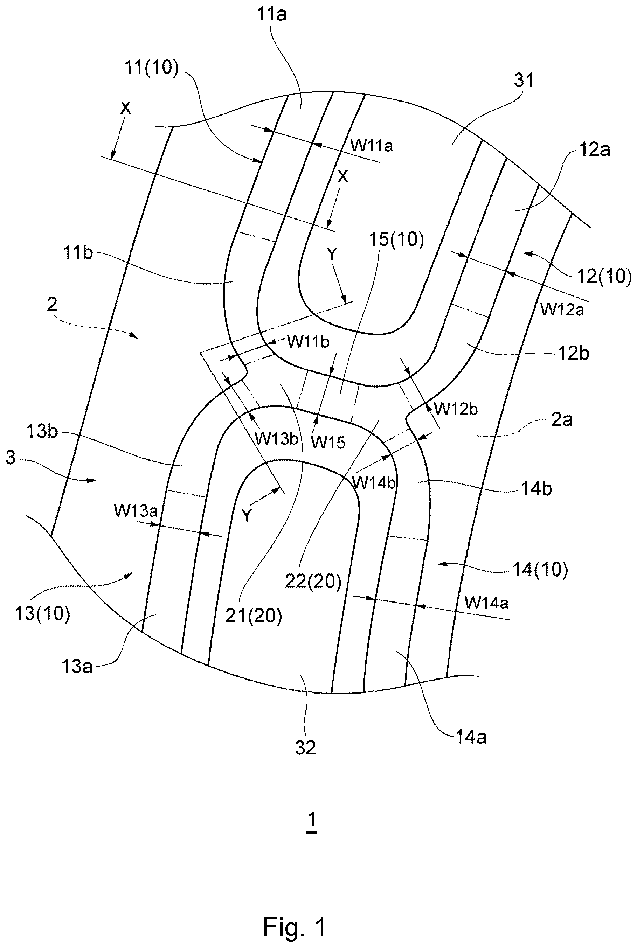

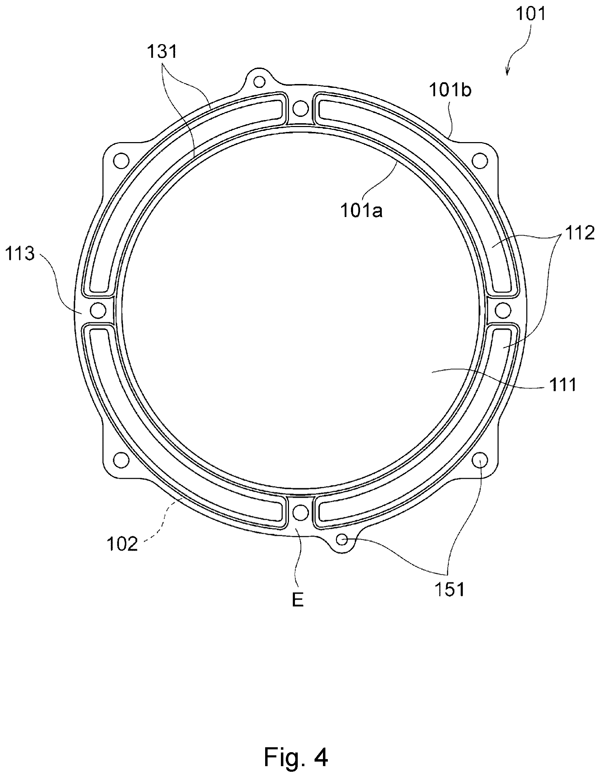

Fig. 1 is a plan view illustrating a portion of the gasket 1 according to an embodiment of the present invention in an enlarged manner. It should be noted that the gasket 1 as a whole has an annular shape as, for example, a later-described gasket 101 (see Fig. 4). As illustrated in Fig. 1, the gasket 1 includes a plurality of beads 10 and at least one base portion 20, which is a portion where the plurality of beads 10 intersect. A width of each of the plurality of beads 10, which connect to the base portion 20, decreases toward the base portion 20. A specific description will be made below on a configuration of the gasket 1.

For example, the gasket 1 includes, as the beads 10, beads 11, 12, 13, 14, 15 and, as the base portion 20, base portions 21, 22 as illustrated in Fig. 1. The gasket 1 also has opening portions 31, 32 adjacent to each other at a distance as illustrated in Fig. 1. The bead 11 and the bead 12 extend along the opening portion 31 and the beads 13, 14 extend along the opening portion 32 as illustrated in Fig. 1. Furthermore, the bead 15 extends between the opening portion 31 and the opening portion 32. Furthermore, the bead 11, the bead 13, and the bead 15 connect together and the base portion 21 is formed among the bead 11, the bead 13, and the bead 15. Furthermore, the bead 12, the bead 14, and the bead 15 connect together and the base portion 22 is formed among the bead 12, the bead 14, and the bead 15.

As illustrated in Fig. 1, the base portion 21 serves as a junction portion as the bead 11 and the bead 13 join together at the base portion 21 to connect to the bead 15, while the base portion 21 also serves as a branch portion as the bead 11 and the bead 13 are branched from the bead 15 at the base portion 21. Likewise, as illustrated in Fig. 1, the base portion 22 serves as a junction portion as the bead 12 and the bead 14 join together at the base portion 22 to connect to the bead 15, while the base portion 22 also serves as a branch portion as the bead 12 and the bead 14 are branched from the bead 15 at the base portion 22.

As illustrated in Fig. 1, the opening portion 31 is surrounded by the bead 11, the base portion 21, the bead 15, the base portion 22, and the bead 12. Furthermore, as illustrated in Fig. 1, the opening portion 32 is surrounded by the bead 13, the base portion 21, the bead 15, the base portion 22, and the bead 14.

As illustrated in Fig. 1, the bead 11 includes a main body portion 11a and a connection portion 11b. The connection portion 11b is a portion extending from the main body portion 11a, connecting to the base portion 21. That is to say, the connection portion 11b is a portion where the bead 11 connects to the base portion 21 and also a portion of the bead 11 adjacent to the base portion 21. The connection portion 11b has a predetermined length in an extending direction of the bead 11. A width of the bead 11 decreases toward the base portion 21 from a predetermined position before the base portion 21.

Furthermore, as illustrated in Fig. 1, the bead 12 includes a main body portion 12a and a connection portion 12b. The connection portion 12b is a portion extending from the main body portion 12a, connecting to the base portion 22. That is to say, the connection portion 12b is a portion where the bead 12 connects to the base portion 22 and also a portion of the bead 12 adjacent to the base portion 22. The connection portion 12b has a predetermined length in an extending direction of the bead 12. A width of the bead 12 decreases toward the base portion 22 from a predetermined position before the base portion 22.

Furthermore, as illustrated in Fig. 1, the bead 13 includes a main body portion 13a and a connection portion 13b. The connection portion 13b is a portion extending from the main body portion 13a, connecting to the base portion 21. That is to say, the connection portion 13b is a portion where the bead 13 connects to the base portion 21 and also a portion of the bead 13 adjacent to the base portion 21. The connection portion 13b has a predetermined length in an extending direction of the bead 13. A width of the bead 13 decreases toward the base portion 21 from a predetermined position before the base portion 21.

Furthermore, as illustrated in Fig. 1, the bead 14 includes a main body portion 14a and a connection portion 14b. The connection portion 14b is a portion extending from the main body portion 14a, connecting to the base portion 22. That is to say, the connection portion 14b is a portion where the bead 14 connects to the base portion 22 and also a portion of the bead 14 adjacent to the base portion 22. The connection portion 14b has a predetermined length in an extending direction of the bead 14. A width of the bead 14 decreases toward the base portion 22 from a predetermined position before the base portion 22.

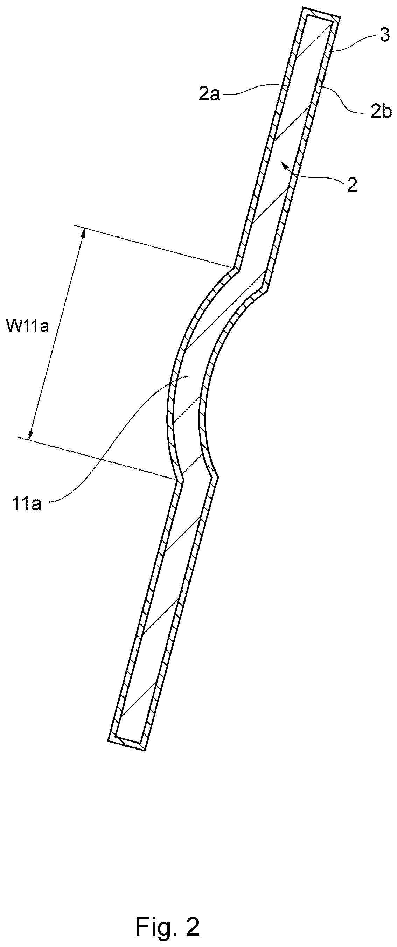

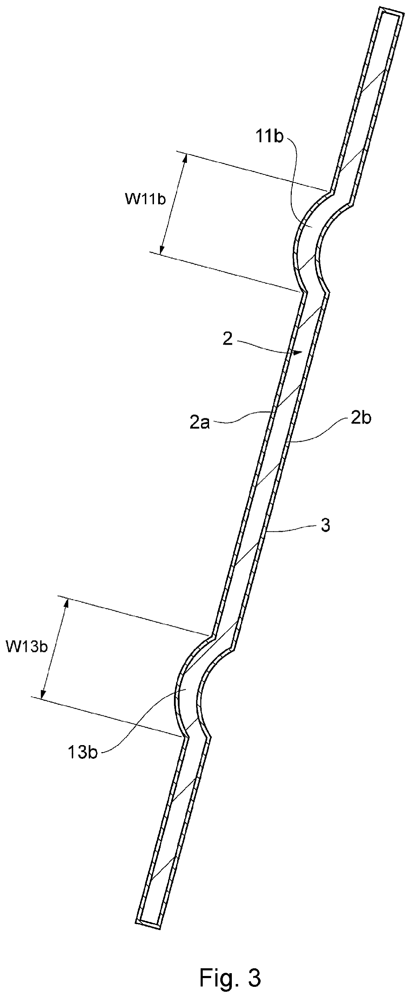

Fig. 2 is a cross-sectional view along an X-X line in Fig. 1 and also a cross-sectional view illustrating a cross section perpendicular to an extending direction of the main body portion 11a of the bead 11. Furthermore, Fig. 3 is a cross-sectional view along a Y-Y line in Fig. 1 and also a cross-sectional view illustrating a cross section perpendicular to an extending direction of the connection portion 11b of the bead 11 and a cross section perpendicular to an extending direction of the connection portion 13b of the bead 13. As illustrated in Figs. 2 and 3, the gasket 1 includes, for example, a base 2 made of metal and an elastic body 3 covering the base 2. The base 2 has a pair of surfaces 2a, 2b facing away from each other and is in the shape of a plate. The elastic body 3, which serves as, for example, coating for the base 2, covers the whole of the base 2. A metal material of the base 2 is, for example, stainless steel, cold-rolled steel sheet, galvanized steel sheet, aluminum plywood, or the like. Furthermore, an elastic material of the elastic body 3 is, for example, a synthetic rubber or a foam rubber that contains at least one rubber composition out of nitrile rubber, styrene-butadiene rubber, fluorine rubber, acrylic rubber, and silicon rubber. The bead 10 is formed by, for example, the base 2 projecting from a surface 2b side toward a surface 2a side.

As illustrated in Figs. 1 to 3, a width W11b of the connection portion 11b of the bead 11 decreases toward the base portion 21. As seen from the above, the width W11b of the connection portion 11b of the bead 11 decreases from a width W11a of the main body portion 11a of the bead 11. It should be noted that the width of the bead 11 refers to a width in a direction perpendicular to the extending direction of the bead 11, the width W11b of the connection portion 11b refers to a width in a direction perpendicular to the extending direction of the connection portion 11b, and the width W11a of the main body portion 11a refers to a width in a direction perpendicular to the extending direction of the main body portion 11a. The width W11b of the connection portion 11b is the smallest, for example, at an end on a base portion 21 side. Specifically, for example, the width W11b of the connection portion 11b gradually decreases from an end on a main body portion 11a side toward the end on the base portion 21 side. It should be noted that the width W11b of the connection portion 11b does not have to gradually decrease from the end on the main body portion 11a side toward the end on the base portion 21 side. For example, the width W11b of the connection portion 11b may intermittently decrease from the end on the main body portion 11a side toward the end on the base portion 21 side.

In contrast, the width W11a of the bead 11 is uniform or substantially uniform throughout in the extending direction of the main body portion 11a as illustrated in Figs. 1 and 2. For example, at the connection portion 11b, the width of the bead 11 is decreased within a range of 25 percents with respect to that of the main body portion 11a. Specifically, for example, the width W11b of the connection portion 11b at the end on the base portion 21 side is a value smaller by 25 percents than the width W11a of the main body portion 11a.

The beads 12 to 14 also have a form similar to the above-described bead 11 and the widths W12b, W13b, W14b of the connection portions 12b, 13b, 14b each decrease as the width W11b of the connection portion 11b of the bead 11. That is to say, a width W12b of the connection portion 12b of the bead 12 decreases toward the base portion 22 and also decreases from a width W12a of the main body portion 12a of the bead 12 as the width W11b of the connection portion 11b of the bead 11. Furthermore, the width W13b of the connection portion 13b of the bead 13 decreases toward the base portion 21 and also decreases from the width W13a of the main body portion 13a of the bead 13 as the width W11b of the connection portion 11b of the bead 11. Furthermore, the width W14b of the connection portion 14b of the bead 14 decreases toward the base portion 22 and also decreases from the width W14a of the main body portion 14a of the bead 14 as the width W11b of the connection portion 11b of the bead 11.

As described above, in the beads 11, 12, 13, 14 of the gasket 1, the widths of the connection portions 11b, 12b, 13b, 14b decrease toward the base portion 21 or the base portion 22 from the main body portions 11a, 12a, 13a, 14a, respectively. It is thus possible to reduce a width of the base portion 21, in which the bead 11 and the bead 13 join together, and reduce a width of the base portion 22, in which the bead 12 and the bead 14 join together. This makes it possible to reduce a reduction in reaction force of the bead 10 at the base portion 21 of the bead 10, reducing the unevenness of the reaction force of the bead 10.

As described above, according to the gasket 1, it is possible to equalize a surface pressure at the base portions 21, 22 connecting to the plurality of beads 10 without the necessity of imposing considerable shape restrictions on the beads 10.

A specific embodiment of the present invention will be described with reference to the drawings. The description will be made in order of the following items.
1. Configuration
   (1) Summary
   (2) Branch Portion
   (3) Width of Bead
2. Workings and Effects
   (1) Surface Pressure of Reference Example
   (2) Surface Pressure of the Present Embodiment
3. Modification Examples

### 1. Configuration

### (1) Summary

The present embodiment is an application example to a metal gasket 101 configured to be installed in a housing of a motor (none of a motor side is illustrated). The metal gasket 101 is used for, for example, sealing a coolant path provided in the housing of the motor.

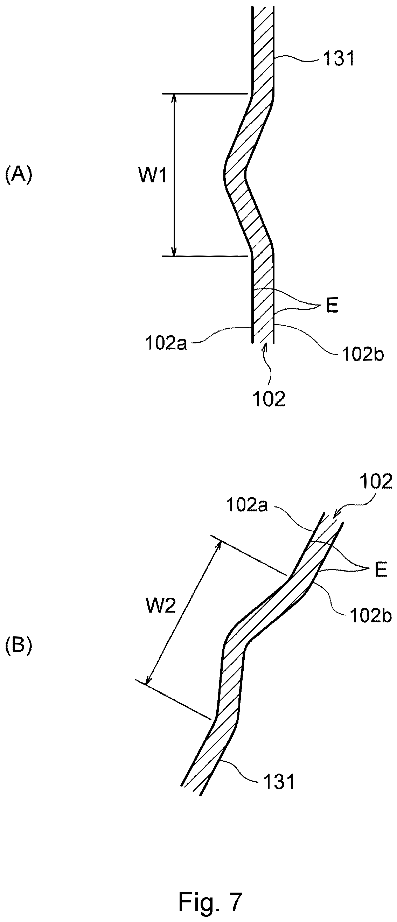

In the metal gasket 101 of the present embodiment, coating of an elastic body E is applied to a surface of a base 102 made of metal and the whole of the base 102 is coated with the elastic body E (see Figs. 7(A), (B)). The base 102 is in the shape of a plate and has surfaces 102a, 102b facing away from each other. For example, stainless steel, cold-rolled steel sheet, galvanized steel sheet, aluminum plywood, or the like is usable as a metal material of the base 102. For example, a synthetic rubber or a foam rubber that contains at least one rubber composition out of nitrile rubber, styrene-butadiene rubber, fluorine rubber, acrylic rubber, and silicon rubber is usable as a material of the elastic body E.

The metal gasket 101 is annular and has a shape corresponding to a member to which the metal gasket 101 is to be attached. For example, the metal gasket 101 is formed in the shape of a ring sized in accordance with an opening (not illustrated) of the housing of the motor as illustrated in Fig. 4. The metal gasket 101 has, on an inner peripheral side, an inner peripheral edge 101a defining a communication hole 111, which is a space being in communication with an inner space of the housing of the motor. The metal gasket 101 also has an outer peripheral edge 101b, which is an edge on an outer peripheral side facing away from the inner peripheral edge 101a. The metal gasket 101 also has one or a plurality of opening portions 112 in accordance with a space to be sealed. The opening portion 112 is a hole penetrating the metal gasket 101. Specifically, the base 102 is formed with the communication hole 111 and the base 102 has the communication hole 111, for example, at a middle portion. The base 102 also has a plurality of cooling path holes 112, which are the opening portions 112, around the communication hole 111. The cooling path holes 112 penetrate the base 102 between the surface 102a and the surface 102b. The plurality of cooling path holes 112 are arranged concentrically with the communication hole 111. With such an arrangement, a land 113 is provided between adjacent ones of the cooling path holes 112. The metal gasket 101 also includes a later-described bead 131 and the bead 131 is formed by the base 102 projecting from a surface 102b side toward a surface 102a side.

The communication hole 111 and the plurality of cooling path holes 112 conceptually constitute "at least two or more opening portions." The communication hole 111 and each of the cooling path holes 112 constitute "two opening portions adjacent to each other."

The communication hole 111 is positioned with respect to the inner space provided in the housing of the motor. The cooling path holes 112 are positioned with respect to a cooling path provided around the inner space (none of the motor side is illustrated).

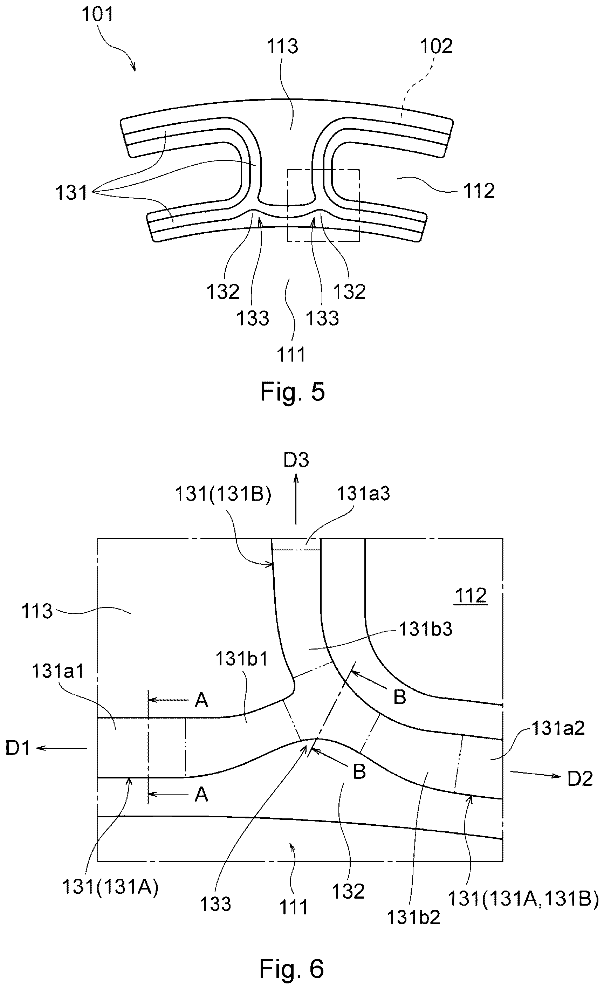

The base 102 of the metal gasket 101 includes the bead 131 branched in three directions to surround perimeters of the two opening portions adjacent to each other, the communication hole 111 and the cooling path hole 112. Within the bead 131, a region provided to surround the perimeter of the communication hole 111 is represented as a bead 131A and a region provided to surround the perimeters of the plurality of cooling path holes 112 is represented as a bead 131B (see Fig. 6). The bead 131A is, so to speak, a bead 131 for the inner space of the housing, which seals the communication hole 111. The bead 131B is, so to speak, a bead 131 for the cooling paths, which seals the cooling path hole 112.

In a region where the communication hole 111 and the cooling path hole 112 are adjacent, of course, the separate bead 131A and bead 131B are not independently provided but the single bead 131 serves as the bead 131A for the inner space of the housing and the bead 131B for the cooling paths. One reason why the single bead 131 is allowed to serve as such two types of beads 131A, 131B that serve such separate roles is that the bead 131 is branched in the three directions as illustrated in Fig. 5.

In Fig. 4, a plurality of holes provided on an outer periphery of the base 102 are bolt holes 151 for securing the metal gasket 101 to the housing of the motor. It should be noted that the metal gasket 101 is secured between facing members in the housing of the motor.

### (2) Branch Portion

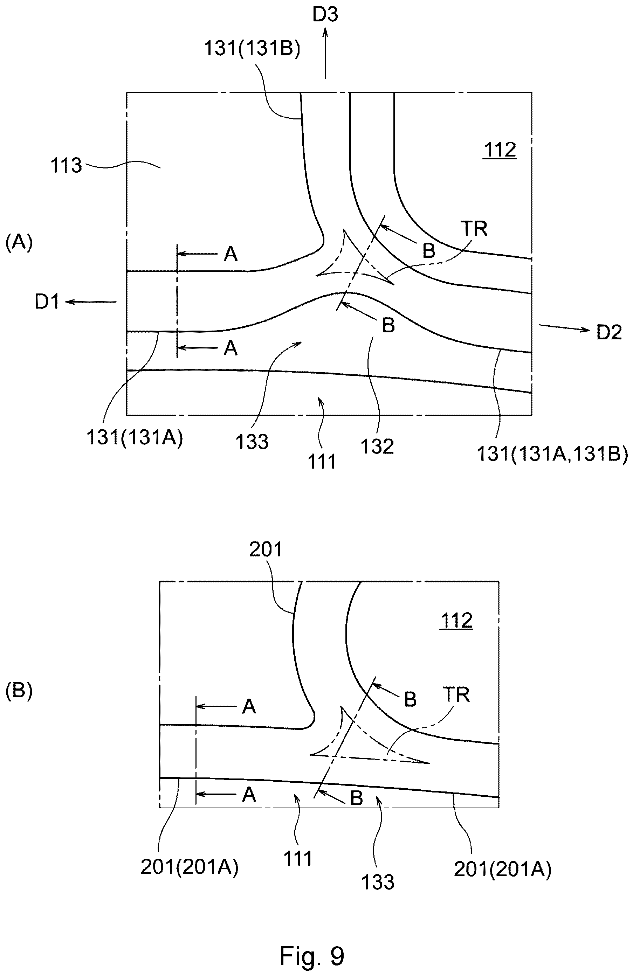

As illustrated in Fig. 5 and Fig. 6, the bead 131A for the inner space of the housing is not perfectly circular but has a recessed shape 132 at a portion branched in the three directions (a later-described branch portion 133). Such a shape of the bead 131A may be more deeply understood by comparison with a bead 201A for the inner space of the housing illustrated as a reference example in Fig. 9(B). Unlike the bead 131A of the present embodiment, the bead 201A of the reference example has no recessed shape 132, so that it has an inner peripheral surface forming an arc with the same curvature.

As illustrated in Fig. 6, a portion of the bead 131 on the land 113, a portion of the bead 131 along the communication hole 111 and the cooling path hole 112, and a portion of the bead 131 on the land 113 along the cooling path hole 112 include main body portions 131a1, 131a2, 131a3 and connection portion 131b1, 131b2, 131b3, respectively, as the bead 10 of the above-described gasket 1. Th main body portions 131a1, 131a2, 131a3 and the connection portions 131b1, 131b2, 131b3 of the bead 131 correspond to the main body portions 11a, 12a, 13a, 14a and the connection portions 11b, 12b, 13b, 14b of the above-described bead 10, respectively. Widths of the connection portions 131b1, 131b2, 131b3 of the bead 131 decrease toward the later-described branch portion 133 as the widths of the connection portions 11b, 12b, 13b, 14b of the above-described bead 11 and decrease from widths of the main body portions 131a1, 131a2, 131a3 of the bead 131, respectively. This results in forming the recessed shape 132 in the later-described branch portion 133, narrowing a width of the branch portion 133.

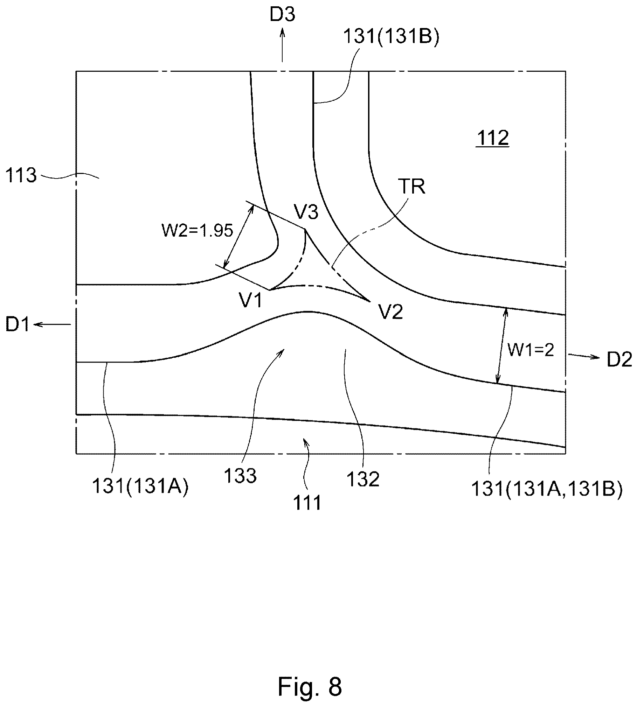

Fig. 6 and Fig. 8 illustrate a portion surrounded by dash-dotted lines in Fig. 5 in an enlarged manner. Referring to Fig. 6 and Fig. 8, it is found that the bead 131 is branched in the three directions between edge portions of the communication hole 111 and the cooling path hole 112, which are "the two opening portions adjacent to each other." Out of the three directions, a first direction D1 is a direction along the communication hole 111 on the land 113. A second direction D2 is a direction along between the adjacent communication hole 111 and cooling path hole 112. Then, a third direction D3 is a direction perpendicular to the communication hole 111 along the cooling path hole 112.

The recessed shape 132 is provided between the beads 131 extending in the first direction D1 and the second direction D2.

In the present embodiment, a portion bringing the beads 131 branched in the three directions D1 to D3 into communication is referred to as branch portion 133. The branch portion 133 is a portion where a plurality of portions of the bead 131 are connected, and corresponds to the base portion 20 of the above-described gasket 1. The branch portion 133 has a shape similar to a triangle zone that is surrounded by a line that follows, that is, traces the centers of the beads 131 branching in the three directions D1 to D3,. In more detail, it is in the shape of an imaginary triangle TR having the three sides curved inward in a recessed shape (illustrated by dash-double-dot lines in Fig 8). At the branch portion 133, the bead 131 is branched in the three directions D1 to D3 from three corners V (V1 to V3) of the triangle TR forming the shape of a triangle zone. The curved sides of the triangle TR are drawn on the lines tracing the centers of the beads 131, so that the three corners V1 to V3 are also positioned on the centers of the beads 131. A branching direction from the corner V1 is the first direction D1, a branching direction from the corner V2 is the second direction D2, and a branching direction from the corner V3 is the third direction D3.

In the present embodiment, it is described that the branch portion 133 is provided in the shape of a triangle zone. One purpose for introducing the concept 'triangle zone' is to eliminate any possibility of ambiguity in interpretation, as the sides of a triangle as geometrically defined are straight lines. That is to say, the branch portion 133 has the shape of the triangle TR having the three sides curved inward in a recessed shape. Therefore, the triangle TR herein is by no means a triangle as geometrically defined. Accordingly, the triangle TR is explained using the term "the shape of a triangle zone", which does not necessarily have the straight sides, to eliminate any possibility of ambiguity in interpretation.

At the branch portion 133, out of the branched beads 131, an angle formed by the bead 131 extending in the first direction D1 and the bead 131 extending in the third direction D3 is an acute angle.

### (3) Width of Bead

Fig. 7(A) is a cross-sectional view along an A-A line in Fig. 6. The A-A line provides a cross section of the bead 131 at a position away from the branch portion 133, that is to say, a spot other than the branch portion 133 and the connection portions 131b1, 131b2, 131b3. As illustrated in Fig. 7(A), a width of the bead 131 at this portion is a width W1. The width W1 is not only a width of the bead 131 at the position of the A-A line in Fig. 6 but also a width of the bead 131 located at a spot other than the branch portion 133 and the connection portions 131b1, 131b2, 131b3.

Fig. 7(B) is a cross section along a B-B line in Fig. 6. The B-B line provides a cross section of the bead 131 located at the branch portion 133. As illustrated in Fig. 7(B), a width of the bead 131 at this portion is a width W2.

### (3-1) First Interpretation

In Fig. 6, the B-B line provides the cross section of, within the bead 131 located at the branch portion 133, a portion that would have a maximum width if no recessed shape 132 were provided (see Fig. 9(B)). In the present embodiment, the creation of the recessed shape 132 makes the width W1 of the bead 131 located at a spot other than the branch portion 133 and the width W2 of the bead 131 located at the branch portion 133 substantially identical as illustrated in Figs. 7(A) and (B).

### (3-2) Second Interpretation

As illustrated in Fig. 8, as for the width W2 of the bead 131 located at the branch portion 133, the position of the width may be specified from another point of view. The width W2 of the bead 131 located at the branch portion 133 illustrated in Fig. 5 is a width between the two corners V1 and V3 of the shape of the triangle TR, from which the two beads 131 forming an acute angle are branched. That is to say, a length between the corner V1 and the corner V3 is a dimension of the width W2 of the bead 131. The corners V (V1 to V3) are located on the centers of the beads 131 as described above and it means that the length between the corner V1 and the corner V3 corresponds to a length connecting the center of the bead 131 branched in the first direction D1 and the center of the bead 131 branched in the third direction D3 at positions of the corners V.

In the example illustrated in Fig. 8,
- Width W1: 2.0 mm
- Width W2: 1.95 mm

Therefore, according to the present embodiment, in a case where the first interpretation is adopted, the width W2 of the bead 131 located at the branch portion 133 is substantially identical to the width W1 of the bead 131 located at a spot other than the branch portion 133. In contrast to the above, in a case where the second interpretation is adopted, the width W2 of the bead 131 located at the branch portion 133 is slightly narrower than the width W1 of the bead 131 located at a spot other than the branch portion 133.

As for the width W2 of the bead 131 located at the branch portion 133, the two types of interpretations are provided regarding which portion corresponds to the width W2. Either interpretation may be adopted in implementation.

However, the width W2 of the bead 131 located at the branch portion 133 has to match the width W1 of the bead 131 located at the main body portions 131a1, 131a2, 131a3 or has to be in a range from a matching state to a half of the width W1 of the bead 131 located at the main body portions 131a1, 131a2, 131a3, inclusive.

The condition for matching herein is that, by way of example, the width W2 of the bead 131 located at the branch portion 133 is in a range of ±10 percents of the width W1 of the bead 131 located at the main body portions 131a1, 131a2, 131a3, inclusive, which means that an upper limit is an increase by 10 percents and a lower limit is a decrease by 10 percents. In other words, the width W2 of the bead 131 located at the branch portion 133 is considered to match the width W1 of the bead 131 located at the main body portions 131a1, 131a2, 131a3 when the width W2 of the bead 131 located at the branch portion 133 is in a range from 90 percents to 110 percents, inclusive, of the width W1 of the bead 131 located at the main body portions 131a1, 131a2, 131a3. Alternatively, the width W2 of the bead 131 located at the branch portion 133 may be in a range from the matching state to a half of the width W1 of the bead 131 located at the main body portions 131a1, 131a2, 131a3. In this case, the width W2 of the bead 131 located at the branch portion 133 is in a range from 50 percents to 110 percents, inclusive, of the width W1 of the bead 131 located at the main body portions 131a1, 131a2, 131a3.

For example, when the width W1 of the bead 131 located at the main body portions 131a1, 131a2, 131a3 is 2.0 mm, it can be said that the width W2 of the bead 131 located at the branch portion 133 matches the width W1 of the bead 131 located at the main body portions 131a1, 131a2, 131a3 as long as falling within a range from 1.8 to 2.2 mm, inclusive. Alternatively, the width W2 of the bead 131 located at the branch portion 133 only has to fall within a range from 1.0 to 2.2 mm, inclusive. Likewise, when the width W1 of the bead 131 located at the main body portions 131a1, 131a2, 131a3 is 4.0 mm, it can be said that both the widths W1, W2 match as long as the width W2 of the bead 131 located at the branch portion 133 falls within a range from 3.6 to 4.4 mm, inclusive. Alternatively, the width W2 of the bead 131 located at the branch portion 133 also only has to fall within a range from 2.0 to 4.4 mm, inclusive, in this case.

As is evident from the above description, in a case where the width W2 of the bead 131 located at the branch portion 133 matches the width W1 of the bead 131 located at the main body portions 131a1, 131a2, 131a3 in the present embodiment, the concept "match" does not necessarily require that they are identical. It can be said that as long as the width W2 of the bead 131 located at the branch portion 133 is in a range of ±10 percents of the width W1 of the bead 131 located at the main body portions 131a1, 131a2, 131a3, it can be said that they "match."

### 2. Workings and Effects

Description will be made on workings and effects.

### (1) Surface Pressure of Reference Example

See Figs. 9(A) and (B). Fig. 9(A) illustrates the bead 131 according to the present embodiment at the branch portion 133 and Fig. 9(B) illustrates a bead 201 for a reference example at the branch portion 133. The present embodiment and the reference example are different in at least the following two points.
- A size of the triangle TR imagined at the branch portion 133 (the presence/absence of the recessed shape 132)
- The overall shapes of the beads 131, 201

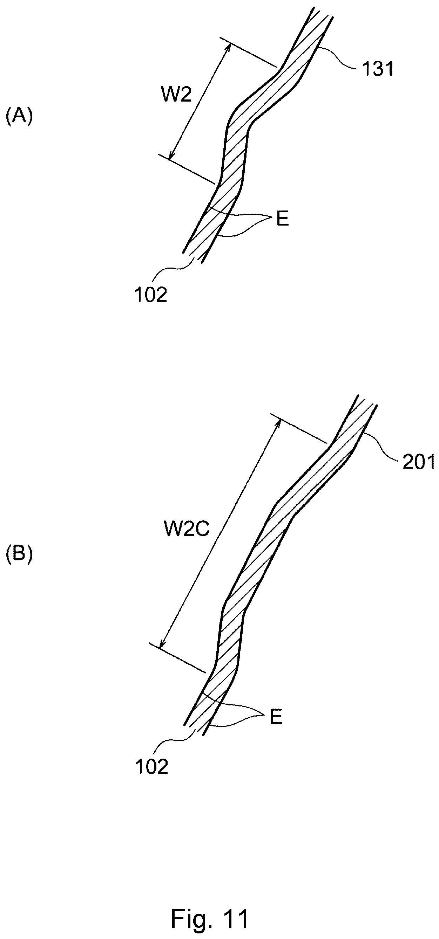

The reference example has no recessed shape 132 and the size of the triangle TR imagined at the branch portion 133 is larger than that of the present embodiment, accordingly. A width W2C (see Fig. 11(B)) of the bead 201 located at the branch portion 133 is thus wider than the width W2 (see Fig. 11(A)) of the bead 131 of the present embodiment.

In the present embodiment, not only a portion in the recessed shape 132 but also a portion of the bead 131 connecting to the branch portion 133, namely, the connection portions 131b1, 131b2, 131b3 of the bead 131, is provided with a shape to narrow the width thereof. In contrast to the above, the bead 201 of the reference example has a uniform width in a region except the shape of the triangle TR imagined at the branch portion 133. As a result, the width W2C (see Fig. 11(B)) of the bead 201 located at the branch portion 133 is wider than the width W2 (see Fig. 11(A)) of the branch portion 133 of the present embodiment.

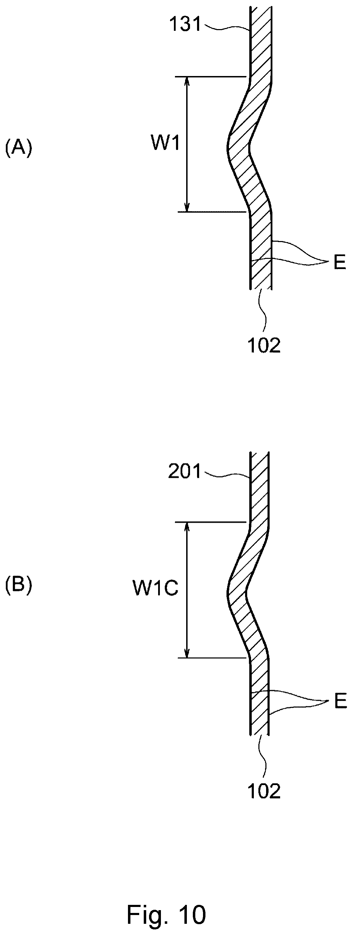

Fig. 10(A) is a cross-sectional view along an A-A line in Fig. 9(A), illustrating the present embodiment, that is to say, the width W1 of the bead 131 located at the main body portions 131a1, 131a2, 131a3.

Fig. 10(B) is a cross-sectional view along an A-A line in Fig. 9(B), illustrating the reference example, that is to say, a width W1C of the bead 201 located at a spot other than the branch portion 133.

As is evident from a comparison of Figs. 10(A), (B), there is no difference between the present embodiment and the reference example in the width W1 of the bead 131 located at the main body portions 131a1, 131a2, 131a3 and the width W1C of the bead 201 located at a spot other than the branch portion 133. This is because the recessed shape 132 has no influence on the widths W1, W1C of the beads 131, 201 at the main body portions 131a1, 131a2, 131a3.

Fig. 11(A) is a cross-sectional view along a B-B line in Fig. 9(A), illustrating the present embodiment, that is to say, the width W2 of the bead 131 located at the branch portion 133.

Fig. 11(B) is a cross-sectional view along a B-B line in Fig. 9(B), illustrating the reference example, that is to say, the width W2C of the bead 201 located at the branch portion 133.

As is evident from a comparison of Figs. 11(A), (B), as for the widths W2, W2C of the beads 131, 201 located at the branch portion 133, the reference example is wider than the present embodiment. This is because no effect of the recessed shape 132 in reducing the width W2 is obtained in the reference example.

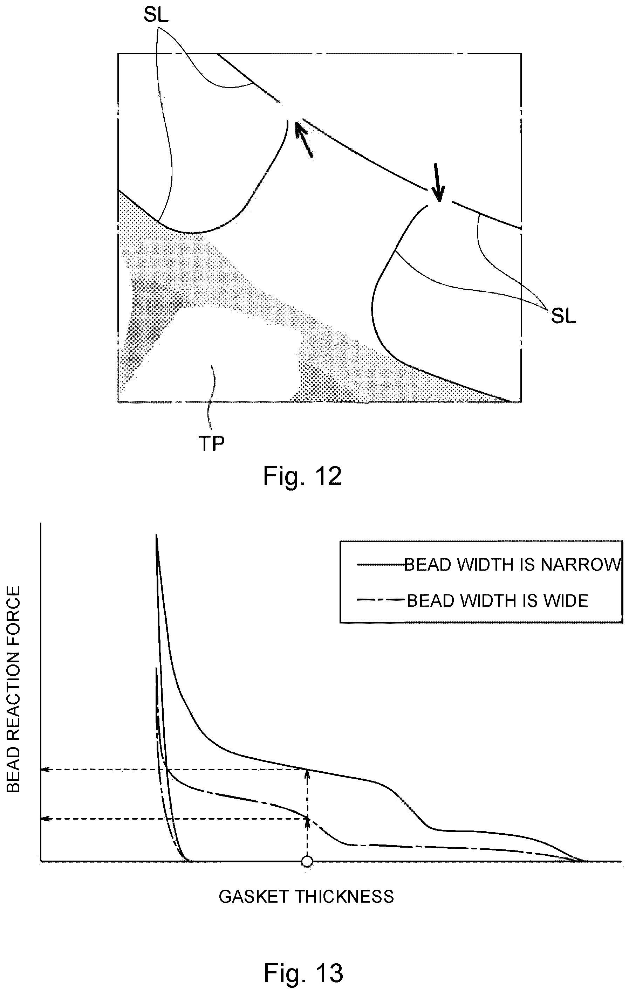

As illustrated in Fig. 12, the inventors and the like of the present application examined a contact pressure applied to a corresponding member by the bead 201 of the reference example through a test using a pressure sensitive paper TP. A line and a surface seen in the pressure sensitive paper TP show a region where a certain contact pressure was obtained. As a result, the inventors and the like have ascertained that the bead 201 leads to the occurrence of a line break in a seal line SK.

In Fig. 12, it is found that line breakage occurs at two spots indicated by arrows.

It is speculated that a cause for the occurrence of a line break may be a local difference in width generated in the bead 201. That is to say, as is evident from a comparison of Fig. 10(B) and Fig. 11(B), the width W2C of the bead 201 located at the branch portion 133 is wide with respect to the width W1C of the bead 201 located at a spot other than the branch portion 133 in the reference example. When compared with the same amount of compression, a contact pressure at a wider portion is lower than that at a narrower portion, so that it is speculated that the contact pressure becomes insufficient, accordingly, causing the occurrence of a line break in the seal line SL.

### (2) Surface Pressure of the Present Embodiment

As illustrated in Fig. 10(A) and Fig. 11(A), in the present embodiment, the width W1 of the bead 131 located at the main body portions 131a1, 131a2, 131a3 almost matches the width W2 of the bead 131 located at the branch portion 133. Alternatively, as for the width W2 of the bead 131 located at the branch portion 133, an upper limit is an increase by 10 percents of the width W1 of the bead 131 located at the main body portions 131a1, 131a2, 131a3 and a lower limit is a decrease by 50 percents thereof.

Thus, there is almost no difference or a slight difference in contact pressure between the bead 131 located at the branch portion 133 and the bead 131 located at a spot other than the branch portion 133. As a result, it is possible to prevent a local line break.

A graph in Fig. 13 shows a difference in bead reaction force depending on whether a bead width is wide or narrow in the form of a relationship with a thickness of a metal gasket. A solid line shows a test result in a case where the bead width is relatively narrow and a dash-dotted line shows a test result in a case where the bead width is relatively wide.

A fact evident from the graph in Fig. 13 is that there is a correlation between bead width and bead reaction force. Thus, it is found that a difference in bead width leads to a difference also in bead reaction force as in the reference example. In a case where there is no difference or only a slight difference, if any, in bead width as in the present embodiment, the bead reaction force does not differ. It is evident also from the graph in Fig. 13 that it is possible to prevent a local line break according to the metal gasket 101 of the present embodiment.

### 3. Modification Examples

In implementation, a variety of modifications and changes are acceptable.

In the present embodiment, the specific purpose of use, shape, size, material, structure, and the like of the metal gasket 101 are discussed. In implementation, the limitation to the purpose of use, shape, size, material, structure, and the like is not necessary and various changes and changes are possible.

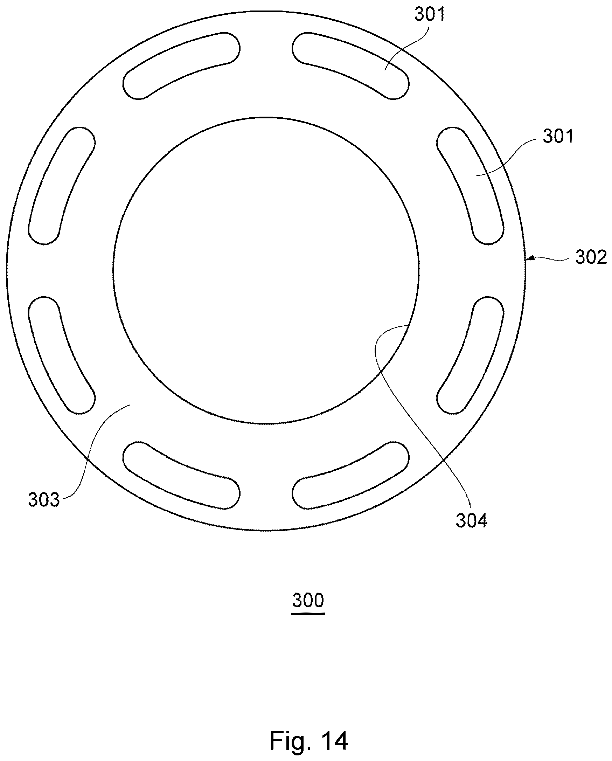

For example, although the metal gasket 101 to be installed in the housing of the motor in use is introduced in the above-described embodiment, such a purpose of use is not limiting and it may be implemented in another field such as a gasket for an air compressor between a cylinder block and a cylinder head of an engine, or as a metal gasket for use in construction machinery, agricultural machinery, industrial robots, or the like in addition to automobiles. For example, the metal gasket 101 is usable for sealing a coolant path 301 in a motor 300 for an electric vehicle as illustrated in Fig. 14. Specifically, as illustrated in Fig. 14, the metal gasket 101 is sandwiched in use between an end surface 303 of a housing 302 of the motor 300 formed with a plurality of coolant paths 301 and a member (not illustrated) of the motor 300 with a surface facing the end surface 303. In this case, the bead 131 of the metal gasket 101 is formed such that it surrounds the plurality of coolant paths 301 and an inner peripheral surface 304 defining an inner space of the housing 302. It should be noted that by way of example, components of the motor such as a stator and rotor are housed in the inner space of the housing 302. For example, a motor is also housed in the inner space of the housing 302 with a housing of the motor being integrated with the housing 302.

In the above-described embodiment, the description is made by way of example on an embodiment where as for the relationship between the width W1 of the bead 131 located at the main body portions 131a1, 131a2, 131a3 and the width W2 of the bead 131 located at the branch portion 133, both widths substantially match or the width W2 of the bead 131 located at the branch portion 133 is in a range from, as the upper limit, an increase by 10 percents of the width W1 of the bead 131 located at the main body portions 131a1, 131a2, 131a3 to, as the lower limit, a decrease by 50 percents thereof, in other words, in a range to 110 percents from 50 percents, inclusive. In this regard, the width W2 of the bead 131 located at the branch portion 133 may be equal to or less than 110% of the width W1 of the bead 131 located at the main body portions 131a1, 131a2, 131a3 and equal to or more than 60 percents, 70 percents, 80 percents, or 90 percents thereof in implementation.

In addition to the above, any and all changes and modifications are acceptable.

The present invention is described through the above-described embodiments hereinabove but the technical scope of the present invention is not limited to the scope according to the above-described embodiments. It is obvious to those skilled in the art that a variety of modifications or improvements may be added to the above-described embodiments. It is obvious from the recitation in claims that an embodiment added with such a modification or an improvement is also within the technical scope of the present invention.

The embodiments described above are intended to facilitate the understanding of the present invention but not intended for a limited interruption of the present invention. Furthermore, the above-described embodiments are not intended to limit an application target for which the present invention is to be used and the present invention may encompass, as the application target, any and all objects. The components of the above-described embodiments and the locations, materials, conditions, shapes, sizes, and the like thereof are not limited to those described by way of example and may be modified, if necessary. For example, the present invention encompasses a difference generated in implementation, such as a manufacturing tolerance. Furthermore, within the scope of technical consistency, the components described in the different embodiments may be partially replaced or combined. Furthermore, the individual components may be selectively combined, if necessary, to achieve at least some of the problems to be solved and the effects described above.

### [Reference Signs List]

1 gasket, 10, 11, 12, 13, 14, 15 bead, 11a, 12a, 13a, 14a main body portion, 11b, 12b, 13b, 14b connection portion, 20, 21, 22 base portion, 31, 32 opening portion, 101 metal gasket, 101a inner peripheral edge, 101b outer peripheral edge, 102 base, 102a, 102b surface, 111 communication hole, 112 cooling path hole (opening portion), 113 land, 131, 131A, 131B bead, 132 recessed shape, 133 branch portion, 151 bolt hole, 201, 201A bead (reference example), D1 first direction, D2 second direction, D3 third direction, E elastic body, SL seal line, TP pressure sensitive paper, TR triangle, V, V1, V2, V3 corner, W1 a width of the bead located at the main body portion, W2 a width of the bead located at the branch portion, W1C a width of the bead located at a spot other than the branch portion (reference example), W2C a width of the bead located at the branch portion (reference example)

## Claims

1. A gasket for sealing between two members facing each other, the gasket comprising:
a plurality of beads; and
at least one base portion, the base portion being a portion where the plurality of beads are connected, wherein
a width of each of the plurality of beads connecting to the base portion decreases toward the base portion.

2. The gasket according to claim 1, wherein
the width of the bead decreases toward the base portion from a predetermined position before the base portion.

3. The gasket according to claim 1, wherein
the width of the bead is decreased within a range of 25 percents.

4. The gasket according to claim 1, wherein
the width of the bead gradually decreases toward the base portion.

5. The gasket according to claim 1, comprising:
a base made of metal; and
an elastic body covering the base, wherein
the plurality of beads and the at least one base portion are formed in the elastic body.

6. The gasket according to claim 1, wherein
the base has at least one opening portion, and
one or a plurality of the beads surrounding the opening portion connects to the base portion.

7. A gasket comprising:
a base made of metal, the base including at least two opening portions adjacent to each other;
a bead molded integrally with the base, the bead being branched in three directions to surround perimeters of the two opening portions adjacent to each other; and
a branch portion provided in a shape of a triangle zone at a branched position of the bead, the branch portion branching the bead in the three directions from positions of three corners, wherein
a width of the bead located at the branch portion is equal to or less than 110 percents of a width of the bead located at a spot other than the branch portion.

8. The gasket according to claim 7, wherein
the width of the bead located at the branch portion is equal to or more than 50 percents of the width of the bead located at the spot other than the branch portion.

9. A gasket comprising:
a base made of metal, the base including at least two opening portions adjacent to each other;
a bead molded integrally with the base, the bead being branched in three directions to surround perimeters of the two opening portions adjacent to each other; and
a branch portion provided in a shape of a triangle zone at a branched position of the bead, the branch portion branching the bead in the three directions from positions of three corners, wherein
the branch portion has a recessed shape to narrow a width of the bead so that the width of the bead located at the branch portion matches a width of the bead at a spot other than the branch portion.

10. The gasket according to claim 9, wherein
the width of the bead located at the branch portion matches the width of the bead located at the spot other than the branch portion when the width of the bead located at the branch portion is in a range from 50 percents to 110 percents, inclusive, of the width of the bead located at the spot other than the branch portion.

11. The gasket according to any one of claims 7 to 10, wherein
the triangle zone has a triangular shape having three sides curved inward in a recessed shape.

12. The gasket according to claim 11, wherein
an angle formed by two of the beads among the beads branching at the branch portion is an acute angle.

13. The gasket according to any one of claims 7 to 10, wherein
the width of the bead located at the branch portion is a maximum width of the bead located at the branch portion.

14. The gasket according to claim 12, wherein
the width of the bead located at the branch portion is a width between two of the corners of the triangular shape from which the two beads forming the acute angle are branched.

15. The gasket according to any one of claims 7 to 10, wherein
the base is coated with an elastic body and a material of the elastic body is rubber.
